# EUROPEAN PATENT SPECIFICATION

(11) **EP 3 361 782 B1**
(45) Date of publication and mention of the grant of the patent: **29.04.2020**
(21) Application number: 15906977.2
(22) Date of filing: 30.10.2015
(51) Int. Cl.: H04L 12/747, H04W 40/00, H04L 12/781

(54) **ROUTING METHOD, DEVICE, NFCC AND DH**
ROUTINGVERFAHREN, VORRICHTUNG, NFCC UND DH
PROCÉDÉ, DISPOSITIF, NFCC ET DH DE ROUTAGE

(43) Date of publication of application: 15.08.2018
(73) Proprietor: Huawei Technologies Co., Ltd., Longgang District Shenzhen, Guangdong 518129 (CN)
(72) Inventor: MEI, Jingqing, Shenzhen Guangdong 518129 (CN); CHANG, Xinmiao, Shenzhen Guangdong 518129 (CN); LI, Guoqing, Shenzhen Guangdong 518129 (CN); ZHAO, Xiaona, Shenzhen Guangdong 518129 (CN)
(74) Representative: Thun, Clemens
(86) International application number: PCT/CN2015/093297
(87) International publication number: WO 2017/070914

(56) References cited:
- CN-A- 102 186 221
- CN-A- 103 222 291
- CN-A- 104 936 129
- US-A1- 2013 217 323
- US-A1- 2013 217 323
- US-A1- 2013 225 073
- US-A1- 2015 124 825

## Description

### TECHNICAL FIELD

Embodiments of the present invention relate to the field of communications technologies, and in particular, to a routing method, a routing apparatus, an NFCC, and a DH.

### BACKGROUND

A device host (English: Device Host, DH for short) creates a routing table according to known routing information of near field communication execution environments (English: Near Field Communication Execution Environment, NFCEE for short), and then configures the entire routing table for a near field communication controller (English: NFC Controller, NFCC for short). The routing table includes multiple types of routing entries, such as an application identifier (English: Application Identifier, AID for short)-based routing entry, an application protocol data unit (English: Application Protocol Data Unit, APDU for short) pattern (English: Pattern) routing entry, a protocol routing entry, and a technical routing entry.

Using an AID-based route as an example, a route lookup method for the NFCC is as follows: The NFCC starts lookup from the first AID-based routing entry in a routing table, and stops lookup after the first matching AID-based routing entry is found. Therefore, a sequence of an AID-based routing entry among all AID-based routing entries in the routing table actually represents a priority of the AID-based routing entry.

In use, priorities of one or more specific routing entries in the routing table probably need to be adjusted according to an actual situation, to improve routing processing efficiency, and/or improve service processing accuracy.

In the prior art, each time a priority of a route is adjusted, the DH needs to update the entire routing table, and then configure the entire updated routing table for the NFCC. This increases system overheads and results in low priority adjustment efficiency.

Document US2013/0217323A1 refers to a routing approach, wherein the source of a routing table information is determined based on data indicating the source. For example, one or more routing table location option bits are set to allow a NFCC to receive routing table information at least from one or more secure computing environments and/or from a device host. In this way, i.e. by obtaining trusted data routing tables from one or more secure computing environments, as opposed to receiving routing table information from a device or module that is susceptible/vulnerable to being manipulated by rogue parties, the likelihood of receiving altered and/or hacked routing table information is reduced.

Document US2015/0124825A1 refers to monitoring data flows to identify large-data ("elephant") flows passing through a network device. For this purpose, fields are extracted from a packet of data to construct a flow key, a hash value is computed based on the flow key to provide a hashed flow signature, which is then compared with entries in a flow hash table. Each hash table entry includes a byte count for a respective flow, and when the byte count exceeds a threshold value, the flow is added to and tracked in a large-data flow table.

Document US2013/0217323 discloses another example of the prior art.

### SUMMARY

Embodiments of the present invention provide routing methods according to claims 1 and 5, and routing apparatus and system according to claims 8 and 12, so as to reduce network overheads and improve priority adjustment efficiency of a routing entry during routing entry priority adjustment.

According to a first aspect, an example provides a routing method, including:
obtaining, by a near field communication controller NFCC, route types supported by a received data frame;
sequentially matching, by the NFCC according to a sequence of the route types supported by the data frame, for each route type, a first routing table and a second routing table of the route type, until a matching routing entry of the data frame is obtained, where
the first routing table includes L routing entries whose priorities need to be boosted, and the L routing entries whose priorities need to be boosted are corresponding to L route types, respectively, where L is an integer greater than or equal to 1; and
selecting, by the NFCC, a route according to the matching routing entry of the data frame.

With reference to the first aspect, in a first possible implementation of the first aspect, before the obtaining, by the NFCC, route types supported by a received data frame, the method further includes:
receiving, by the NFCC, a first route configuration instruction sent by a device host DH, where the first route configuration instruction includes a preferred route identifier and the first routing table, and the preferred route identifier is used to indicate a routing entry whose priority needs to be boosted in the first routing table; and
saving, by the NFCC, the first routing table according to the first route configuration instruction.

With reference to the first possible implementation of the first aspect, in a second possible implementation of the first aspect, the route types supported by the data frame are R route types, and the sequence of the route types is from the first route type to the R^{th} route type in order, where R is an integer greater than or equal to 1; and
the sequentially matching, by the NFCC according to a sequence of the route types supported by the data frame, for each route type, a first routing table and a second routing table of the route type, until a matching routing entry of the data frame is obtained includes:
matching, by the NFCC for the i^{th} route type, the first routing table, and if a matching routing entry of the i^{th} route type of the data frame exists in the first routing table, determining that the matching routing entry of the i^{th} route type is the matching routing entry of the data frame; or
if a matching routing entry of the i^{th} route type of the data frame does not exist in the first routing table, matching, by the NFCC, a second routing table of the i^{th} route type, and if a matching routing entry of the i^{th} route type of the data frame exists in the second routing table, determining that the matching routing entry of the i^{th} route type is the matching routing entry of the data frame; or
if a matching routing entry of the i^{th} route type of the data frame does not exist in the second routing table, and i<R, increasing a value of i by 1, performing again the matching, by the NFCC for the i^{th} route type, the first routing table, where an initial value of i is 1, and i is an integer greater than or equal to 1 and less than or equal to R.

With reference to the second possible implementation of the first aspect, in a third possible implementation of the first aspect, before the receiving, by the NFCC, a first route configuration instruction sent by a DH, the method further includes:
receiving, by the NFCC, a second route configuration instruction sent by the DH, where the second route configuration instruction includes a first type identifier and the second routing table, the second routing table includes M routing entries, and the first type identifier is used to indicate that a route type corresponding to the second routing table is the j^{th} route type, where M an integer greater than or equal to 1, and j is an integer greater than or equal to 1 and less than or equal to L; and
saving, by the NFCC, the second routing table as a second routing table of the j^{th} route type according to the second route configuration instruction.

With reference to the third possible implementation of the first aspect, in a fourth possible implementation of the first aspect, each routing entry in the second routing table includes a second type identifier used to indicate a route type to which the routing entry belongs; and
before the saving, by the NFCC, the second routing table as a second routing table of the j^{th} route type, the method further includes:
determining, by the NFCC, that the second type identifier of each routing entry in the second routing table indicates that a route type to which the routing entry belongs is the j^{th} route type.

With reference to any one of the first possible implementation to the fourth possible implementation of the first aspect, in a fifth possible implementation of the first aspect, after the saving, by the NFCC, the first routing table, the method further includes:
receiving, by the NFCC, a third route configuration instruction sent by the DH, where the third route configuration instruction includes an identifier of the first routing table, and the third route configuration instruction is used to instruct to empty the first routing table; and
emptying, by the NFCC, the first routing table.

With reference to any one of the first aspect or the first possible implementation to the fifth possible implementation of the first aspect, in a sixth possible implementation of the first aspect, the method further includes:
receiving, by the NFCC, a fourth route configuration instruction sent by the DH, where the fourth route configuration instruction includes an identifier of the second routing table of the j^{th} route type, and the fourth route configuration instruction is used to instruct to empty the second routing table of the j^{th} route type; and
emptying, by the NFCC, the second routing table of the j^{th} route type.

With reference to any one of the first aspect or the first possible implementation to the sixth possible implementation of the first aspect, in a seventh possible implementation of the first aspect, the L route types include at least one of the following route types: application identifier AID-based route, application protocol data unit APDU pattern route, systematic code SC route, protocol route, or technical route.

According to a second aspect, an example provides a routing method, including:
generating, by a device host DH, a first routing table according to L routing entries whose priorities need to be boosted, where the first routing table includes the L routing entries whose priorities need to be boosted, and the L routing entries whose priorities need to be boosted are corresponding to L route types, respectively, where L is an integer greater than or equal to 1; and
sending, by the DH, a first route configuration instruction to a near field communication controller NFCC, where the first route configuration instruction includes a preferred route identifier and the first routing table, and the preferred route identifier is used to indicate a routing entry whose priority needs to be boosted in the first routing table, so that the NFCC performs routing processing on a received data frame according to the first routing table.

With reference to the second aspect, in a first possible implementation of the second aspect, before the sending, by the DH, a first route configuration instruction to an NFCC, the method further includes:
generating, by the device host DH, a second routing table of the j^{th} route type, where the second routing table includes M routing entries, M is an integer greater than or equal to 1, and j is an integer greater than or equal to 1 and less than or equal to L; and
sending, by the DH, a second route configuration instruction to the NFCC, where the second route configuration instruction includes a first type identifier and the second routing table, and the first type identifier is used to indicate that a route type corresponding to the second routing table is the j^{th} route type, so that the NFCC saves the second routing table of the j^{th} route type according to the second route configuration instruction.

With reference to the first possible implementation of the second aspect, in a second possible implementation of the second aspect, each routing entry in the second routing table includes a second type identifier used to indicate a route type to which the routing entry belongs.

With reference to the second aspect or the first possible implementation of the second aspect or the second possible implementation of the second aspect, in a third possible implementation of the second aspect, after the sending, by the DH, a first route configuration instruction to an NFCC, the method further includes:
when the DH determines that boosting the priority of the routing entry in the first routing table needs to be canceled, sending, by the DH, a third route configuration instruction to the NFCC, where the third route configuration instruction includes an identifier of the first routing table, and the third route configuration instruction is used to instruct to empty the first routing table, so that the NFCC empties the first routing table.

With reference to any one of the second aspect or the first possible implementation to the third possible implementation of the second aspect, in a fourth possible implementation of the second aspect, the method further includes:
sending, by the DH, a fourth route configuration instruction to the NFCC, where the fourth route configuration instruction includes an identifier of the second routing table of the j^{th} route type, and the fourth route configuration instruction is used to instruct to empty the second routing table of the j^{th} route type, so that the NFCC empties the second routing table of the j^{th} route type.

With reference to any one of the second aspect or the first possible implementation to the fourth possible implementation of the second aspect, in a fifth possible implementation of the second aspect, the L route types include at least one of the following route types: application identifier AID-based route, application protocol data unit APDU pattern route, systematic code SC route, protocol route, or technical route.

According to a third aspect, an example provides a routing apparatus, including:
an obtaining module, configured to obtain route types supported by a received data frame;
a processing module, configured to sequentially match, according to a sequence of the route types supported by the data frame, for each route type, a first routing table and a second routing table of the route type, until a matching routing entry of the data frame is obtained, where
the first routing table includes L routing entries whose priorities need to be boosted, and the L routing entries whose priorities need to be boosted are corresponding to L route types, respectively, where L is an integer greater than or equal to 1; and
a routing module, configured to select a route according to the matching routing entry of the data frame.

With reference to the third aspect, in a first possible implementation of the third aspect, the apparatus further includes:
a receiving module, configured to receive a first route configuration instruction sent by a device host DH, where the first route configuration instruction includes a preferred route identifier and the first routing table, and the preferred route identifier is used to indicate a routing entry whose priority needs to be boosted in the first routing table; and
a configuration module, configured to save the first routing table according to the first route configuration instruction.

With reference to the first possible implementation of the third aspect, in a second possible implementation of the third aspect, the route types supported by the data frame are R route types, and the sequence of the route types is from the first route type to the R^{th} route type in order, where R is an integer greater than or equal to 1; and
the processing module is specifically configured to: match, for the i^{th} route type, the first routing table, and if a matching routing entry of the i^{th} route type of the data frame exists in the first routing table, determine that the matching routing entry of the i^{th} route type is the matching routing entry of the data frame; or if a matching routing entry of the i^{th} route type of the data frame does not exist in the first routing table, match a second routing table of the i^{th} route type, and if a matching routing entry of the i^{th} route type of the data frame exists in the second routing table, determine that the matching routing entry of the i^{th} route type is the matching routing entry of the data frame; or if a matching routing entry of the i^{th} route type of the data frame does not exist in the second routing table, and i<R, increase a value of i by 1, perform again the matching, for the i^{th} route type, the first routing table, where an initial value of i is 1, and i is an integer greater than or equal to 1 and less than or equal to R.

With reference to the second possible implementation of the third aspect, in a third possible implementation of the third aspect, the receiving module is further configured to receive a second route configuration instruction sent by the DH, where the second route configuration instruction includes a first type identifier and the second routing table, the second routing table includes M routing entries, and the first type identifier is used to indicate that a route type corresponding to the second routing table is the j^{th} route type, where M is an integer greater than or equal to 1, and j is an integer greater than or equal to 1 and less than or equal to L; and
the configuration module is further configured to save the second routing table as a second routing table of the j^{th} route type according to the second route configuration instruction.

With reference to the third possible implementation of the third aspect, in a fourth possible implementation of the third aspect, each routing entry in the second routing table includes a second type identifier used to indicate a route type to which the routing entry belongs; and
the configuration module is further configured to determine that the second type identifier of each routing entry in the second routing table indicates that a route type to which the routing entry belongs is the j^{th} route type.

With reference to any one of the first possible implementation to the fourth possible implementation of the third aspect, in a fifth possible implementation of the third aspect, the receiving module is further configured to receive a third route configuration instruction sent by the DH, where the third route configuration instruction includes an identifier of the first routing table, and the third route configuration instruction is used to instruct to empty the first routing table; and
the configuration module is further configured to empty the first routing table.

With reference to any one of the third aspect or the first possible implementation to the fifth possible implementation of the third aspect, in a sixth possible implementation of the third aspect, the receiving module is further configured to receive a fourth route configuration instruction sent by the DH, where the fourth route configuration instruction includes an identifier of the second routing table of the j^{th} route type, and the fourth route configuration instruction is used to instruct to empty the second routing table of the j^{th} route type; and
the configuration module is further configured to empty the second routing table of the j^{th} route type.

With reference to any one of the third aspect or the first possible implementation to the sixth possible implementation of the third aspect, in a seventh possible implementation of the third aspect, the L route types include at least one of the following route types: application identifier AID-based route, application protocol data unit APDU pattern route, systematic code SC route, protocol route, or technical route.

According to a fourth aspect, an example provides a routing apparatus, including:
a processing module, configured to generate a first routing table according to L routing entries whose priorities need to be boosted, where the first routing table includes the L routing entries whose priorities need to be boosted, and the L routing entries whose priorities need to be boosted are corresponding to L route types, respectively, where L is an integer greater than or equal to 1; and
a sending module, configured to send a first route configuration instruction to a near field communication controller NFCC, where the first route configuration instruction includes a preferred route identifier and the first routing table, and the preferred route identifier is used to indicate a routing entry whose priority needs to be boosted in the first routing table, so that the NFCC performs routing processing on a received data frame according to the first routing table.

With reference to the fourth aspect, in a first possible implementation of the fourth aspect, the processing module is further configured to generate a second routing table of the j^{th} route type, where the second routing table includes M routing entries, M is an integer greater than or equal to 1, and j is an integer greater than or equal to 1 and less than or equal to L; and
the sending module is further configured to send a second route configuration instruction, where the second route configuration instruction includes a first type identifier and the second routing table, and the first type identifier is used to indicate that a route type corresponding to the second routing table is the j^{th} route type, so that the NFCC saves the second routing table of the j^{th} route type according to the second route configuration instruction.

With reference to the first possible implementation of the fourth aspect, in a second possible implementation of the fourth aspect, each routing entry in the second routing table includes a second type identifier used to indicate a route type to which the routing entry belongs.

With reference to the fourth aspect or the first possible implementation of the fourth aspect or the second possible implementation of the fourth aspect, in a third possible implementation of the fourth aspect, the sending module is further configured to: when the DH determines that boosting the priority of the routing entry in the first routing table needs to be canceled, send, for the DH, a third route configuration instruction to the NFCC, where the third route configuration instruction includes an identifier of the first routing table, and the third route configuration instruction is used to instruct to empty the first routing table, so that the NFCC empties the first routing table.

With reference to any one of the fourth aspect or the first possible implementation of the fourth aspect to the third possible implementation of the fourth aspect, in a fourth possible implementation of the fourth aspect, the sending module is further configured to send a fourth route configuration instruction to the NFCC, where the fourth route configuration instruction includes an identifier of the second routing table of the j^{th} route type, and the fourth route configuration instruction is used to instruct to empty the second routing table of the j^{th} route type, so that the NFCC empties the second routing table of the j^{th} route type.

With reference to any one of the fourth aspect or the first possible implementation to the fourth possible implementation of the fourth aspect, in a fifth possible implementation of the fourth aspect, the L route types include at least one of the following route types: application identifier AID-based route, application protocol data unit APDU pattern route, systematic code SC route, protocol route, or technical route.

According to a fifth aspect, an example provides a near field communication controller NFCC, including:
a communications interface, a memory, a processor, and a communications bus, where the communications interface, the memory, and the processor perform communication by using the communications bus;
the memory is configured to store a first routing table and a second routing table; and
the processor is configured to: obtain route types supported by a received data frame; sequentially match, according to a sequence of the route types supported by the data frame, for each route type, the first routing table and the second routing table of the route type, until a matching routing entry of the data frame is obtained, where the first routing table includes L routing entries whose priorities need to be boosted, and the L routing entries whose priorities need to be boosted are corresponding to L route types, respectively, where L is an integer greater than or equal to 1; and select a route according to the matching routing entry of the data frame.

According to a sixth aspect, an example provides a device host DH, including:
a communications interface, a memory, a processor, and a communications bus, where the communications interface, the memory, and the processor perform communication by using the communications bus;
the memory is configured to store a first routing table;
the processor is configured to generate the first routing table according to routing entries whose priorities need to be boosted and that are corresponding to L route types, respectively, where the first routing table includes L routing entries whose priorities need to be boosted, and the L routing entries whose priorities need to be boosted are corresponding to the L route types, respectively, where L is an integer greater than or equal to 1; and
the communications interface is configured to send a first route configuration instruction to a near field communication controller NFCC, where the first route configuration instruction includes a preferred route identifier and the first routing table, and the preferred route identifier is used to indicate a routing entry whose priority needs to be boosted in the first routing table, so that the NFCC performs routing processing on a received data frame according to the first routing table.

According to the routing method, the routing apparatus, the NFCC, and the DH provided in the embodiments of the present invention, an NFCC obtains route types supported by a received data frame; sequentially matches, according to a sequence of the route types supported by the data frame, for each route type, a first routing table and a second routing table of the route types, until a matching routing entry of the data frame is obtained; and selects a route according to the matching routing entry of the data frame. Because the first routing table includes L routing entries whose priorities need to be boosted, and the L routing entries whose priorities need to be boosted are corresponding to L route types, respectively. That is, the routing entries whose priorities need to be boosted are all put into a new routing table. In addition, during matching, for each route type, matching is performed on the first routing table preferably. Therefore, priority adjustment efficiency is improved, and routing efficiency is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of Embodiment 1 of a routing method according to the present invention;
FIG. 2 is a schematic flowchart of Embodiment 2 of a routing method according to the present invention;
FIG. 3 is a schematic flowchart of Embodiment 3 of a routing method according to the present invention;
FIG. 4 is a schematic structural diagram of Embodiment 1 of a routing apparatus according to the present invention;
FIG. 5 is a schematic structural diagram of Embodiment 2 of a routing apparatus according to the present invention;
FIG. 6 is a schematic structural diagram of an embodiment of an NFCC according to the present invention; and
FIG. 7 is a schematic structural diagram of an embodiment of a DH according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

In the present invention, routing entries whose priorities need to be boosted are all put into a new routing table, that is, a first routing table described in the following embodiments. After a data frame is received, a route type supported by the data frame is obtained. For each route type, matching is performed on the first routing table preferably. Because all routing entries whose priorities need to be boosted are put into the first routing table, there is no need to update the entire routing table. Therefore, priority adjustment efficiency is improved. In addition, during matching, matching is performed on the first routing table preferably for each route type supported by the data frame. Therefore, routing efficiency is improved.

The following describes a technical solution of the present invention in detail by using specific embodiments. The following specific embodiments may be combined, and the same or similar concepts or processes may be not repeated in some embodiments.

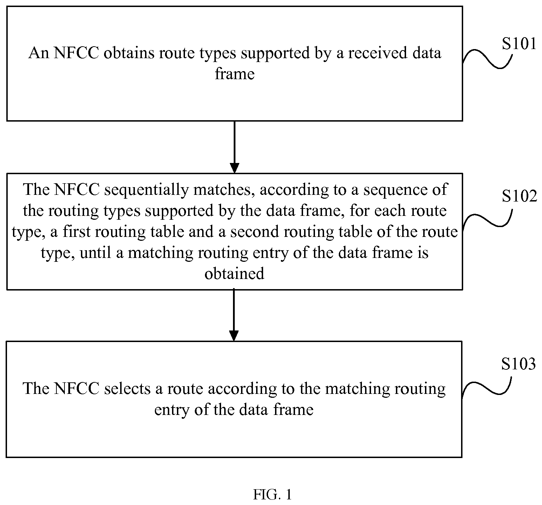

FIG. 1 is a schematic flowchart of Embodiment 1 of a routing method according to the present invention. This embodiment is executed by an NFCC. The method of this embodiment is as follows:
S101. An NFCC obtains route types supported by a received data frame.

A same data frame may support one or more route types. Multiple route types have different priorities, and are arranged in descending order or in ascending order according to the different priorities of the route types. Such a sequence is referred to as a route type sequence in the embodiments of the present invention.

S102. The NFCC sequentially matches, according to a sequence of the route types supported by the data frame, for each route type, a first routing table and a second routing table of the route type, until a matching routing entry of the data frame is obtained.

The first routing table includes L routing entries whose priorities need to be boosted, and the L routing entries whose priorities need to be boosted are corresponding to L route types, respectively, where L is an integer greater than or equal to 1. A routing entry whose priority needs to be boosted indicates that a priority of the routing entry needs to be boosted to a highest level among all routing entries of a route type to which the routing entry belongs, that is, the routing entry is the first routing entry searched among all the routing entries of the route type to which the routing entry belongs.

The L route types include at least one of the following route types: application identifier AID-based route, application protocol data unit APDU pattern route, systematic code SC route, protocol route, or technical route.

For example, the data frame received by the NFCC supports three route types: a route type 1, a route type 2, and a route type 3. It is assumed that a sequence of the route types is the route type 1, the route type 2, and the route type 3. The NFCC first matches a routing entry of the route type 1 in the first routing table. If a matching routing entry of the data frame exists, the matching routing entry of the data frame is obtained. If a matching routing entry of the data frame does not exist in the first routing table, the NFCC matches a second routing table of the route type 1. If a matching routing entry of the data frame exists in the second routing table of the route type 1, the matching routing entry of the data frame is obtained. If a matching routing entry of the data frame does not exist in the second routing table of the route type 1, the NFCC matches a routing entry of the route type 2 in the first routing table. If a matching routing entry of the data frame exists, the matching routing entry of the data frame is obtained. If a matching routing entry of the data frame does not exist in the first routing table, the NFCC matches a second routing table of the route type 2. If a matching routing entry of the data frame exists in the second routing table of the route type 2, the matching routing entry of the data frame is obtained. If a matching routing entry of the data frame does not exist in the second routing table of the route type 2, the NFCC matches a routing entry of the route type 3 in the first routing table. If a matching routing entry of the data frame exists, the matching routing entry of the data frame is obtained. If a matching routing entry of the data frame does not exist in the first routing table, the NFCC matches a second routing table of the route type 3. The process ends after the matching routing entry of the data frame is obtained.

S103. The NFCC selects a route according to the matching routing entry of the data frame.

In this embodiment, an NFCC obtains route types supported by a received data frame; sequentially matches, according to a sequence of the route types supported by the data frame, for each route type, a first routing table and a second routing table of the route type, until a matching routing entry of the data frame is obtained; and performs routing according to the matching routing entry of the data frame. There are L routing entries whose priorities need to be boosted, and the L routing entries whose priorities need to be boosted are corresponding to L route types, respectively. That is, the routing entries whose priorities need to be boosted are all put into a new routing table, and during matching, matching is performed on the first routing table preferably for each route type. Therefore, priority adjustment efficiency is improved, and routing efficiency is improved.

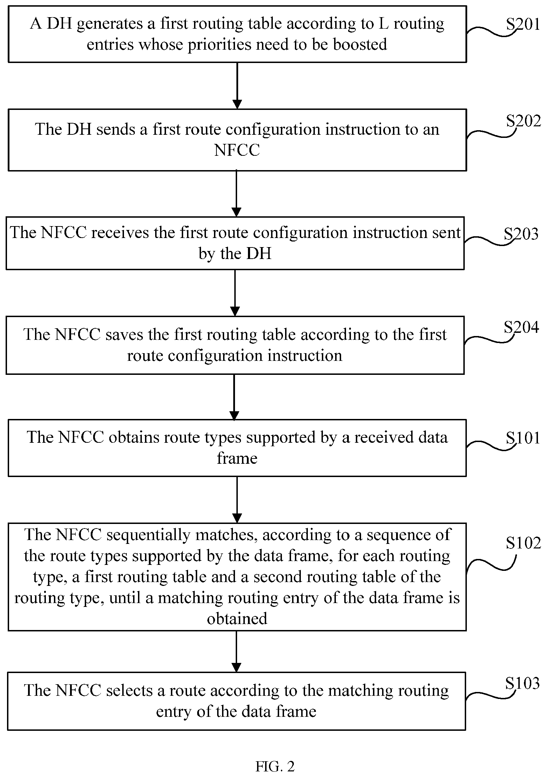

FIG. 2 is a schematic flowchart of Embodiment 2 of a routing method according to the present invention. FIG. 2 is based on the method embodiment shown in FIG. 1, and before S101 is performed, the method further includes S201 to S204.

S201. A DH generates a first routing table according to L routing entries whose priorities need to be boosted.

The first routing table includes the L routing entries whose priorities need to be boosted, and the L routing entries whose priorities need to be boosted are corresponding to L route types, respectively, where L is an integer greater than or equal to 1.

When the priorities of the routing entries of the L route types need to be adjusted, the DH may determine routing entries whose priorities need to be boosted, for example, N routing entries, where N is an integer greater than or equal to 1, and then generate the first routing table. The first routing table includes the N routing entries whose priorities need to be boosted.

S202. The DH sends a first route configuration instruction to an NFCC.

The first route configuration instruction includes a preferred route identifier and the first routing table. The preferred route identifier is used to indicate a routing entry whose priority needs to be boosted in the first routing table, so that the NFCC performs routing processing on a received data frame according to the first routing table.

It should be noted that the preferred route identifier may be an explicit identifier (such as a specific code), or an implicit identifier, for example, the first route configuration instruction itself is only used to configure a preferred routing table, or the preferred routing table is distinguished from a routing table of a general type by excluding a routing table type field in format or by other means.

The L route types include at least one of the following route types: AID-based routing, APDU pattern route, systematic code route, protocol route, or technical route.

S203. The NFCC receives the first route configuration instruction sent by the DH.

The first route configuration instruction includes the preferred route identifier and the first routing table. The preferred route identifier is used to indicate a routing entry whose priority needs to be boosted in the first routing table.

S204. The NFCC saves the first routing table according to the first route configuration instruction.

After receiving the first route configuration instruction, the NFCC determines that the first routing table included in the instruction is a preferred routing table, and saves the first routing table, so as to perform routing processing according to the first routing table and the second routing table after receiving the data frame later.

Specifically, one possible implementation is: after receiving the first route configuration instruction, the NFCC determines whether a preferred routing table is stored in the NFCC, and if no preferred routing table is stored in the NFCC, the NFCC directly saves the first routing table; if a preferred routing table is stored in the NFCC, the stored preferred routing table is replaced with the first routing table. Therefore, after the NFCC saves the first routing table, the first routing table becomes the preferred routing table stored in the NFCC. A priority of each routing entry in the stored preferred routing table is the highest among priorities of all routing entries of a route type to which the routing entry belongs.

Optionally, after performing S204, the NFCC may further send a first route configuration response to the DH to indicate that configuration of the preferred routing table is complete.

S101. The NFCC obtains route types supported by a received data frame.

For this step, refer to detailed descriptions of S101 shown in FIG. 1, and details are not further described herein.

S102. The NFCC sequentially matches, according to a sequence of the route types supported by the data frame, for each route type, a first routing table and a second routing table of the route type, until a matching routing entry of the data frame is obtained.

The first routing table includes routing entries that are corresponding to the L route types, respectively and whose priorities need to be boosted, where L is an integer greater than or equal to 1.

It is assumed that the route types supported by the data frame are R route types, and the sequence of the route types is from the first route type to the R^{th} route type in order, where R is an integer greater than or equal to 1.

Specifically, an initial value of i is 1, and the NFCC matches the first routing table for the i^{th} route type. If a matching routing entry of the i^{th} route type of the data frame exists in the first routing table, the NFCC determines that the matching routing entry of the i^{th} route type is the matching routing entry of the data frame.

If a matching routing entry of the i^{th} route type of the data frame does not exist in the first routing table, the NFCC matches a second routing table of the i^{th} route type. If a matching routing entry of the i^{th} route type of the data frame exists in the second routing table, the NFCC determines that the matching routing entry of the i^{th} route type is the matching routing entry of the data frame.

If a matching routing entry of the i^{th} route type of the data frame does not exist in the second routing table, and i<R, a value of i is increased by 1, and the matching, by the NFCC for the i^{th} route type, the first routing table is performed again, where an initial value of i is 1, and i is an integer greater than or equal to 1 and less than or equal to R.

S103. The NFCC selects a route according to the matching routing entry of the data frame.

In this embodiment, a DH generates, according to L routing entries whose priorities need to be boosted, a first routing table, and sends a first route configuration instruction to an NFCC. The NFCC saves the first routing table according to the first route configuration instruction, to complete configuration of a routing entry whose priority needs to be boosted, instead of updating a routing table including routing entries of all route types in the prior art. Therefore, network overheads are reduced, and priority adjustment efficiency of routing entries is improved.

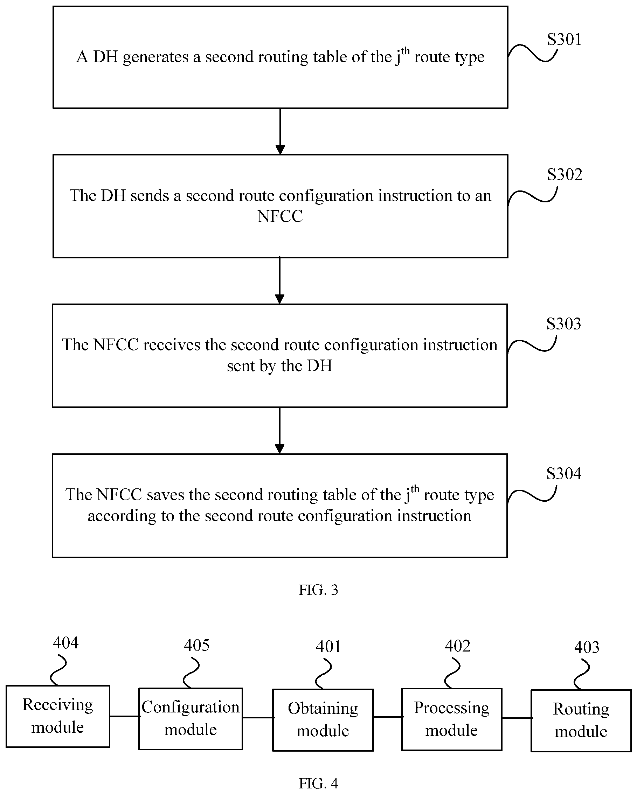

FIG. 3 is a schematic flowchart of Embodiment 3 of a routing method according to the present invention. FIG. 3 is based on the method embodiment shown in FIG. 2, and before S201 is performed, the method further includes the following steps.

S301. A DH generates a second routing table of the j^{th} route type.

The second routing table includes M routing entries, where M is an integer greater than or equal to 1, and j is an integer greater than or equal to 1 and less than or equal to L.

The DH needs to generate a second routing table of each route type in advance. Routing entries in each second routing table all belong to a same route type.

S302. The DH sends a second route configuration instruction to an NFCC.

The second route configuration instruction includes a first type identifier and the second routing table. The first type identifier is used to indicate that a route type corresponding to the second routing table is the j^{th} route type.

For example, if the first type identifier is an application identifier AID-based route, it indicates that routing entries in the second routing table in the second route configuration instruction all are AID-based routes; if the first type identifier is an APDU pattern route, it indicates that routing entries in the second routing table in the second route configuration instruction all are APDU pattern routes; if the first type identifier is a systematic code SC route, it indicates that routing entries in the second routing table in the second route configuration instruction all are systematic code SC routes. Similar cases are not enumerated in the present invention.

S303. The NFCC receives the second route configuration instruction sent by the DH.

S304. The NFCC saves a second routing table of the j^{th} route type according to the second route configuration instruction.

Specifically, to improve accuracy of configuration, each routing entry of the second routing table includes a second type identifier used to indicate a route type to which the routing entry belongs. Before S302 is performed, the method further includes: The NFCC determines whether the second type identifier of each routing entry in the second routing table indicates that the route type to which the routing entry belongs is the j^{th} route type. If the NFCC determines that the second type identifier of each routing entry in the second routing table indicates that the route type to which the routing entry belongs is the j^{th} route type, the NFCC saves the second routing table of the j^{th} route type. If the NFCC determines that the second type identifier of each routing entry in the second routing table does not indicate that the route type to which the routing entry belongs is the j^{th} route type, the NFCC discards the second routing table of the j^{th} route type.

In this embodiment, a DH generates a second routing table of the j^{th} route type, and sends a second route configuration instruction to an NFCC. The NFCC saves the second routing table as the second routing table of the j^{th} route type according to the second route configuration instruction, to complete configuration of a second route type.

In the foregoing embodiments, when the DH determines that boosting the priority of the routing entry in the first routing table needs to be canceled, the DH sends a third route configuration instruction to the NFCC, where the third route configuration instruction includes an identifier of the first routing table, and the third route configuration instruction is used to instruct to empty the first routing table. The NFCC receives the third route configuration instruction sent by the DH, where the third route configuration instruction includes the identifier of the first routing table, and the third route configuration instruction is used to instruct to empty the first routing table. The NFCC empties the first routing table.

Specifically, one implementation of emptying, by the NFCC, the first routing table is receiving an empty routing table sent by the DH, storing the empty routing table, and deleting the first routing table, that is, overwriting the first routing table with the empty routing table.

In the foregoing embodiments, the method further includes: sending, by the DH, a fourth route configuration instruction to the NFCC, where the fourth route configuration instruction includes an identifier of the second routing table of the j^{th} route type, and the fourth route configuration instruction is used to instruct to empty the second routing table of the j^{th} route type, so that the NFCC empties the second routing table of the j^{th} route type; receiving, by the NFCC, the fourth route configuration instruction sent by the DH, where the fourth route configuration instruction includes the identifier of the second routing table of the j^{th} route type, and the fourth route configuration instruction is used to instruct to empty the second routing table of the j^{th} route type; and emptying, by the NFCC, the second routing table of the j^{th} route type. One implementation of emptying, by the NFCC, the second routing table of the j^{th} route type is receiving an empty routing table sent by the DH, storing the empty routing table, and deleting the second routing table of the j^{th} route type, that is, overwriting the second routing table of the j^{th} route type with the empty routing table.

FIG. 4 is a schematic structural diagram of Embodiment 1 of a routing apparatus according to the present invention. As shown in FIG. 4, the apparatus in this embodiment includes an obtaining module 401, a processing module 402, and a routing module 403. The obtaining module 401 is configured to obtain route types supported by a received data frame. The processing module 402 is configured to sequentially match, according to a sequence of the route types supported by the data frame, for each route type, a first routing table and a second routing table of the route type, until a matching routing entry of the data frame is obtained. The first routing table includes L routing entries whose priorities need to be boosted, and the L routing entries whose priorities need to be boosted are corresponding to L route types, respectively, where L is an integer greater than or equal to 1. The routing module 403 is configured to select a route according to the matching routing entry of the data frame.

In the foregoing embodiment, further, the apparatus further includes a receiving module 404 and a configuration module 405. The receiving module 404 is configured to receive a first route configuration instruction sent by a device host DH, where the first route configuration instruction includes a preferred route identifier and the first routing table, and the preferred route identifier is used to indicate a routing entry whose priority needs to be boosted in the first routing table. The configuration module 405 is configured to save the first routing table according to the first route configuration instruction.

In the foregoing embodiment, the route types supported by the data frame are R route types, and the sequence of the route types is from the first route type to the R^{th} route type in order, where R is an integer greater than or equal to 1.

The processing module 402 is specifically configured to: match, for the i^{th} route type, the first routing table, and if a matching routing entry of the i^{th} route type of the data frame exists in the first routing table, determine that the matching routing entry of the i^{th} route type is the matching routing entry of the data frame; or if a matching routing entry of the i^{th} route type of the data frame does not exist in the first routing table, match a second routing table of the i^{th} route type, and if a matching routing entry of the i^{th} route type of the data frame exists in the second routing table, determine that the matching routing entry of the i^{th} route type is the matching routing entry of the data frame; or if a matching routing entry of the i^{th} route type of the data frame does not exist in the second routing table, and i<R, increase a value of i by 1, perform again the matching, for the i^{th} route type, the first routing table, where an initial value of i is 1, and i is an integer greater than or equal to 1 and less than or equal to R.

In the foregoing embodiment, the receiving module 404 is further configured to receive a second route configuration instruction sent by the DH, where the second route configuration instruction includes a first type identifier and the second routing table, the second routing table includes M routing entries, and the first type identifier is used to indicate that a route type corresponding to the second routing table is the j^{th} route type, where M is an integer greater than or equal to 1, and j is an integer greater than or equal to 1 and less than or equal to L. The configuration module 405 is further configured to save the second routing table as a second routing table of the j^{th} route type according to the second route configuration instruction.

In the foregoing embodiment, each routing entry in the second routing table includes a second type identifier used to indicate a route type to which the routing entry belongs. The configuration module 405 is further configured to determine that the second type identifier of each routing entry in the second routing table indicates that a route type to which the routing entry belongs is the j^{th} route type.

In the foregoing embodiment, the receiving module 404 is further configured to receive a third route configuration instruction sent by the DH, where the third route configuration instruction includes an identifier of the first routing table, and the third route configuration instruction is used to instruct to empty the first routing table. The configuration module 405 is further configured to empty the first routing table.

In the foregoing embodiment, the receiving module 404 is further configured to receive a fourth route configuration instruction sent by the DH, where the fourth route configuration instruction includes an identifier of the second routing table of the j^{th} route type, and the fourth route configuration instruction is used to instruct to empty the second routing table of the j^{th} route type. The configuration module 405 is further configured to empty the second routing table of the j^{th} route type.

In the foregoing embodiment, the L route types include at least one of the following route types: application identifier AID-based route, application protocol data unit APDU pattern route, systematic code SC route, protocol route, or technical route.

The foregoing apparatus may correspondingly be configured to perform the corresponding steps in the method embodiments shown in FIG. 1 to FIG. 3. Implementation principles and technical effects are similar to those of the method embodiments, and details are not described herein again.

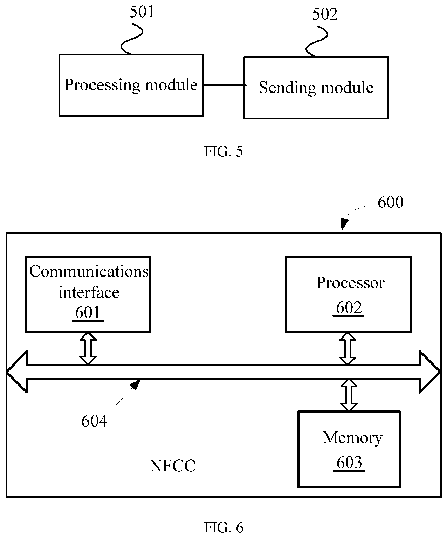

FIG. 5 is a schematic structural diagram of Embodiment 2 of a routing apparatus according to the present invention. As shown in FIG. 5, the apparatus in this embodiment includes a processing module 501 and a sending module 502. The processing module 501 is configured to generate, according to L routing entries whose priorities need to be boosted, a first routing table, where the first routing table includes the L routing entries whose priorities need to be boosted, and the L routing entries whose priorities need to be boosted are corresponding to L route types, respectively, where L is an integer greater than or equal to 1. The sending module 502 is configured to send a first route configuration instruction to a near field communication controller NFCC, where the first route configuration instruction includes a preferred route identifier and the first routing table, and the preferred route identifier is used to indicate a routing entry whose priority needs to be boosted in the first routing table, so that the NFCC performs routing processing on a received data frame according to the first routing table.

In the foregoing embodiment, the processing module 501 is further configured to generate a second routing table of the j^{th} route type, where the second routing table includes M routing entries, M is an integer greater than or equal to 1, and j is an integer greater than or equal to 1 and less than or equal to L. The sending module 502 is further configured to send a second route configuration instruction, where the second route configuration instruction includes a first type identifier and the second routing table, and the first type identifier is used to indicate that a route type corresponding to the second routing table is the j^{th} route type, so that the NFCC saves the second routing table of the j^{th} route type according to the second route configuration instruction.

In the foregoing embodiment, each routing entry in the second routing table includes a second type identifier used to indicate a route type to which the routing entry belongs.

In the foregoing embodiment, the sending module 502 is further configured to: when the DH determines that boosting the priority of the routing entry in the first routing table needs to be canceled, send, for the DH, a third route configuration instruction to the NFCC, where the third route configuration instruction includes an identifier of the first routing table, and the third route configuration instruction is used to instruct to empty the first routing table, so that the NFCC empties the first routing table.

In the foregoing embodiment, the sending module 502 is further configured to send a fourth route configuration instruction to the NFCC, where the fourth route configuration instruction includes an identifier of the second routing table of the j^{th} route type, and the fourth route configuration instruction is used to instruct to empty the second routing table of the j^{th} route type, so that the NFCC empties the second routing table of the j^{th} route type.

In the foregoing embodiment, the L route types include at least one of the following route types: application identifier AID-based route, application protocol data unit APDU pattern route, systematic code SC route, protocol route, or technical route.

The foregoing apparatus may correspondingly be configured to perform the corresponding steps in the method embodiment shown in FIG. 2 or FIG. 3. Implementation principles and technical effects are similar to those of the method embodiment, and details are not described herein again.

FIG. 6 is a schematic structural diagram of an embodiment of an NFCC according to the present invention. As shown in FIG. 6, the NFCC 600 in this embodiment includes a communications interface 601, a memory 603, a processor 602, and a communications bus 604. The communications interface 601, the memory 603, and the processor 602 perform communication by using the communications bus 604. The bus 604 may be a peripheral component interconnect (peripheral component interconnect, PCI for short) bus, an extended industry standard architecture (extended industry standard architecture, EISA for short) bus, or the like. The bus may be categorized into an address bus, a data bus, a control bus, and the like. For ease of representation, the bus is represented by using only one bold line in FIG. 6, which, however, does not mean that there is only one bus or only one type of bus.

The memory is configured to store a first routing table and a second routing table. The memory 603 may include a random access memory (random access memory, RAM for short), and may further include a non-volatile memory (non-volatile memory), for example, at least one magnetic disk memory.

The processor is configured to: obtain route types supported by a received data frame; sequentially match, according to a sequence of the route types supported by the data frame, for each route type, the first routing table and a second routing table of the route type, until a matching routing entry of the data frame is obtained, where the first routing table includes L routing entries whose priorities need to be boosted,
the first routing table includes L routing entries whose priorities need to be boosted, and the L routing entries whose priorities need to be boosted are corresponding to L route types, respectively, where L is an integer greater than or equal to 1; and select a route according to the matching routing entry of the data frame.

The processor 602 may be a general purpose processor, including a central processing unit (Central Processing Unit, CPU for short), a network processor (Network Processor, NP for short), or the like; or may be a digital signal processor (DSP), an application-specific integrated circuit (ASIC), a field programmable gate array (FPGA) or another programmable logical device, a discrete gate or transistor logic device, or a discrete hardware component.

Optionally, the communications interface 601 is further configured to receive a first route configuration instruction sent by a device host DH, where the first route configuration instruction includes a preferred route identifier and the first routing table, and the preferred route identifier is used to indicate a routing entry whose priority needs to be boosted in the first routing table.

The processor 602 is further configured to store the first routing table into the memory according to the first route configuration instruction.

Optionally, the route types supported by the data frame are R route types, and the sequence of the route types is from the first route type to the R^{th} route type in order, where R is an integer greater than or equal to 1.

That the processor 602 is configured to: sequentially match, according to a sequence of the route types supported by the data frame, for each route type, a first routing table and a second routing table of the route type, until a matching routing entry of the data frame is obtained includes: the processor is configured to: match the first routing table for the i^{th} route type; if a matching routing entry of the i^{th} route type of the data frame exists in the first routing table, determine that the matching routing entry of the i^{th} route type is the matching routing entry of the data frame; or if a matching routing entry of the i^{th} route type of the data frame does not exist in the first routing table, match a second routing table of the i^{th} route type, and if a matching routing entry of the i^{th} route type of the data frame exists in the second routing table, determine that the matching routing entry of the i^{th} route type is the matching routing entry of the data frame; or if a matching routing entry of the i^{th} route type of the data frame does not exist in the second routing table, and i<R, increase a value of i by 1, and perform again the matching, for the i^{th} route type, the first routing table, where an initial value of i is 1, and i is an integer greater than or equal to 1 and less than or equal to R.

Optionally, the communications interface 601 is further configured to receive a second route configuration instruction sent by the DH, where the second route configuration instruction includes a first type identifier and the second routing table, the second routing table includes M routing entries, and the first type identifier is used to indicate that a route type corresponding to the second routing table is the j^{th} route type, where M is an integer greater than or equal to 1, and j is an integer greater than or equal to 1 and less than or equal to L.

The processor 602 is further configured to save the second routing table as a second routing table of the j^{th} route type according to the second route configuration instruction, and store the second routing table of the j^{th} route type into the memory.

Optionally, each routing entry in the second routing table includes a second type identifier used to indicate a route type to which the routing entry belongs.

The processor 602 is further configured to determine that the second type identifier of each routing entry in the second routing table indicates that a route type to which the routing entry belongs is the j^{th} route type.

Optionally, the communications interface 601 is further configured to receive a third route configuration instruction sent by the DH, where the third route configuration instruction includes an identifier of the first routing table, and the third route configuration instruction is used to instruct to empty the first routing table.

The processor 602 is further configured to empty the first routing table.

Optionally, the communications interface 601 is further configured to receive a fourth route configuration instruction sent by the DH, where the fourth route configuration instruction includes an identifier of the second routing table of the j^{th} route type, and the fourth route configuration instruction is used to instruct to empty the second routing table of the j^{th} route type.

The processor 602 is further configured to empty the second routing table of the j^{th} route type.

The foregoing NFCC may correspondingly be configured to perform the corresponding steps in the method embodiment shown in FIG. 1. Implementation principles and technical effects are similar to those of the method embodiment, and details are not described herein again.

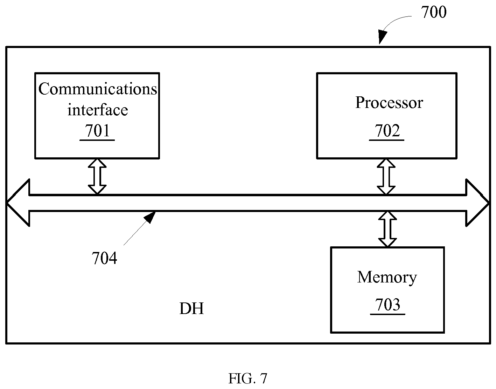

FIG. 7 is a schematic structural diagram of an embodiment of a DH according to the present invention. As shown in FIG. 7, the apparatus DH in this embodiment includes a communications interface 701, a memory 703, a processor 702, and a communications bus 704. The communications interface 701, the memory 703, and the processor 702 perform communication by using the communications bus 704. The bus 704 may be a peripheral component interconnect (peripheral component interconnect, PCI for short) bus, an extended industry standard architecture (extended industry standard architecture, EISA for short) bus, or the like. The bus may be categorized into an address bus, a data bus, a control bus, and the like. For ease of representation, the bus is represented by using only one bold line in FIG. 7, which, however, does not mean that there is only one bus or only one type of bus.

The memory 703 is configured to store a first routing table. The memory 703 may include a random access memory (random access memory, RAM for short), and may further include a non-volatile memory (non-volatile memory), for example, at least one magnetic disk memory. The processor is configured to generate the first routing table according to routing entries whose priorities need to be boosted and that are corresponding to L route types, respectively, where the first routing table includes L routing entries whose priorities need to be boosted, and the L routing entries whose priorities need to be boosted are corresponding to the L route types, respectively, where L is an integer greater than or equal to 1.

The communications interface is configured to send a first route configuration instruction to a near field communication controller NFCC, where the first route configuration instruction includes a preferred route identifier and the first routing table, and the preferred route identifier is used to indicate a routing entry whose priority needs to be boosted in the first routing table, so that the NFCC performs routing processing on a received data frame according to the first routing table.

The processor 702 may be a general purpose processor, including a central processing unit (Central Processing Unit, CPU for short), a network processor (Network Processor, NP for short), or the like; or may be a digital signal processor (DSP), an application-specific integrated circuit (ASIC), a field programmable gate array (FPGA) or another programmable logical device, a discrete gate or transistor logic device, or a discrete hardware component.

Optionally, the processor 702 is further configured to generate a second routing table of the j^{th} route type, where the second routing table includes M routing entries, M is an integer greater than or equal to 1, and j is an integer greater than or equal to 1 and less than or equal to L.

The communications interface 701 is further configured to send a second route configuration instruction to the NFCC, where the second route configuration instruction includes a first type identifier and the second routing table, and the first type identifier is used to indicate that a route type corresponding to the second routing table is the j^{th} route type, so that the NFCC saves the second routing table of the j^{th} route type according to the second route configuration instruction.

Optionally, each routing entry in the second routing table includes a second type identifier used to indicate a route type to which the routing entry belongs.

Optionally, when the DH determines that boosting the priority of the routing entry in the first routing table needs to be canceled, the communications interface 701 is further configured to send a third route configuration instruction to the NFCC, where the third route configuration instruction includes an identifier of the first routing table, and the third route configuration instruction is used to instruct to empty the first routing table, so that the NFCC empties the first routing table.

Optionally, the communications interface 701 is further configured to send a fourth route configuration instruction to the NFCC, where the fourth route configuration instruction includes an identifier of the second routing table of the j^{th} route type, and the fourth route configuration instruction is used to instruct to empty the second routing table of the j^{th} route type, so that the NFCC empties the second routing table of the j^{th} route type.

The foregoing apparatus may correspondingly be configured to perform the corresponding steps in the method embodiment shown in FIG. 2. Implementation principles and technical effects are similar to those of the method embodiment, and details are not described herein again.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a read-only memory (English: Read-Only Memory, ROM for short), a random access memory (English: Random Access Memory, RAM for short), a magnetic disk, or an optical disc.

## Claims

1. A routing method, comprising:
obtaining, by a near field communication controller NFCC, route types supported by a received data frame (S101);
sequentially matching, by the NFCC according to a sequence of the route types supported by the data frame, for each route type, a first routing table and, if a matching routing entry of the data frame does not exist in the first routing table, a second routing table of the route type, until a matching routing entry of the data frame is obtained (S102), wherein
the first routing table comprises L routing entries whose priorities needed to be boosted to a highest level among all routing entries of a route type to which the routing entry belongs, and the L routing entries whose priorities needed to be boosted are corresponding to L route types, respectively, wherein L is an integer greater than or equal to 1; and
selecting, by the NFCC, a route according to the matching routing entry of the data frame (S103).

2. The method according to claim 1, wherein before the obtaining, by the NFCC, route types supported by a received data frame (S101), the method further comprises:
receiving, by the NFCC, a first route configuration instruction sent by a device host DH (S203), wherein the first route configuration instruction comprises a preferred route identifier and the first routing table, and the preferred route identifier is used to indicate a routing entry whose priority needs to be boosted in the first routing table; and
saving, by the NFCC, the first routing table according to the first route configuration instruction (S204).

3. The method according to claim 2, wherein the route types supported by the data frame are R route types, and the sequence of the route types is from the first route type to the R^{th} route type in order, wherein R is an integer greater than or equal to 1; and
the sequentially matching, by the NFCC according to a sequence of the route types supported by the data frame, for each route type, a first routing table and a second routing table of the route type, until a matching routing entry of the data frame is obtained (S102) comprises:
matching, by the NFCC for the i^{th} route type, the first routing table, and if a matching routing entry of the i^{th} route type of the data frame exists in the first routing table, determining that the matching routing entry of the i^{th} route type is the matching routing entry of the data frame; or
if a matching routing entry of the i^{th} route type of the data frame does not exist in the first routing table, matching, by the NFCC, a second routing table of the i^{th} route type, and if a matching routing entry of the i^{th} route type of the data frame exists in the second routing table, determining that the matching routing entry of the i^{th} route type is the matching routing entry of the data frame; or
if a matching routing entry of the i^{th} route type of the data frame does not exist in the second routing table, and i<R, increasing a value of i by 1, performing again the matching, by the NFCC for the i^{th} route type, the first routing table, wherein an initial value of i is 1, and i is an integer greater than or equal to 1 and less than or equal to R.

4. The method according to claim 2 or 3, wherein before the receiving, by the NFCC, a first route configuration instruction sent by a DH, the method further comprises:
receiving, by the NFCC, a second route configuration instruction sent by the DH (S303), wherein the second route configuration instruction comprises a first type identifier and the second routing table, the second routing table comprises M routing entries, and the first type identifier is used to indicate that a route type corresponding to the second routing table is the j^{th} route type, wherein M an integer greater than or equal to 1, and j is an integer greater than or equal to 1 and less than or equal to L; and
saving, by the NFCC, the second routing table as a second routing table of the j^{th} route type according to the second route configuration instruction (S304).

5. A routing method, comprising:
generating, by a device host DH, a first routing table according to L routing entries whose priorities need to be boosted (S201), wherein the first routing table comprises the L routing entries whose priorities need to be boosted, and the L routing entries whose priorities need to be boosted are corresponding to L route types, respectively, wherein L is an integer greater than or equal to 1; and
sending, by the DH, a first route configuration instruction to a near field communication controller NFCC (S202), wherein the first route configuration instruction comprises a preferred route identifier and the first routing table, and the preferred route identifier is used to indicate a routing entry whose priority needs to be boosted in the first routing table, and
the NFCC performing routing processing on a received data frame according to the routing method of claim 1.

6. The method according to claim 5, wherein before the sending, by the DH, a first route configuration instruction to an NFCC, the method further comprises:
generating, by the device host DH, a second routing table of the j^{th} route type (S301), wherein the second routing table comprises M routing entries, M is an integer greater than or equal to 1, and j is an integer greater than or equal to 1 and less than or equal to L; and
sending, by the DH, a second route configuration instruction to the NFCC (S302), wherein the second route configuration instruction comprises a first type identifier and the second routing table, and the first type identifier is used to indicate that a route type corresponding to the second routing table is the j^{th} route type, so that the NFCC saves the second routing table of the j^{th} route type according to the second route configuration instruction.

7. The method according to claim 5 or 6, wherein after the sending, by the DH, a first route configuration instruction to an NFCC, the method further comprises:
when the DH determines that boosting the priority of the routing entry in the first routing table needs to be canceled, sending, by the DH, a third route configuration instruction to the NFCC, wherein the third route configuration instruction comprises an identifier of the first routing table, and the third route configuration instruction is used to instruct to empty the first routing table, so that the NFCC empties the first routing table.

8. A routing apparatus, comprising:
an obtaining module (401), configured to obtain route types supported by a received data frame;
a processing module (402), configured to sequentially match, according to a sequence of the route types supported by the data frame, for each route type, a first routing table and, if a matching routing entry of the data frame does not exist in the first routing table, a second routing table of the route type, until a matching routing entry of the data frame is obtained, wherein
the first routing table comprises L routing entries whose priorities needed to be boosted to a highest level among all routing entries of a route type to which the routing entry belongs, and the L routing entries whose priorities needed to be boosted are corresponding to L route types, respectively, wherein L is an integer greater than or equal to 1; and
a routing module (403), configured to select a route according to the matching routing entry of the data frame.

9. The apparatus according to claim 8, further comprising:
a receiving module (404), configured to receive a first route configuration instruction sent by a device host DH, wherein the first route configuration instruction comprises a preferred route identifier and the first routing table, and the preferred route identifier is used to indicate a routing entry whose priority needs to be boosted in the first routing table; and
a configuration module (405), configured to save the first routing table according to the first route configuration instruction.

10. The apparatus according to claim 9, wherein the route types supported by the data frame are R route types, and the sequence of the route types is from the first route type to the R^{th} route type in order, wherein R is an integer greater than or equal to 1; and
the processing module (402) is specifically configured to: match, for the i^{th} route type, the first routing table; and if a matching routing entry of the i^{th} route type of the data frame exists in the first routing table, determine that the matching routing entry of the i^{th} route type is the matching routing entry of the data frame; or if a matching routing entry of the i^{th} route type of the data frame does not exist in the first routing table, match a second routing table of the i^{th} route type, and if a matching routing entry of the i^{th} route type of the data frame exists in the second routing table, determine that the matching routing entry of the i^{th} route type is the matching routing entry of the data frame; or if a matching routing entry of the i^{th} route type of the data frame does not exist in the second routing table, and i<R, increase a value of i by 1, perform again the matching, for the i^{th} route type, the first routing table, wherein an initial value of i is 1, and i is an integer greater than or equal to 1 and less than or equal to R.

11. The apparatus according to claim 9 or 10, wherein the receiving module (404) is further configured to receive a second route configuration instruction sent by the DH, wherein the second route configuration instruction comprises a first type identifier and the second routing table, the second routing table comprises M routing entries, and the first type identifier is used to indicate that a route type corresponding to the second routing table is the j^{th} route type, wherein M is an integer greater than or equal to 1, and j is an integer greater than or equal to 1 and less than or equal to L; and
the configuration module is further configured to save the second routing table as a second routing table of the j^{th} route type according to the second route configuration instruction.

12. A system comprising a near field communication controller and a routing apparatus, the routing apparatus, comprising:
a processing module (501), configured to generate a first routing table according to L routing entries whose priorities need to be boosted, wherein the first routing table comprises the L routing entries whose priorities need to be boosted, and the L routing entries whose priorities need to be boosted are corresponding to L route types, respectively, wherein L is an integer greater than or equal to 1; and
a sending module (502), configured to send a first route configuration instruction to a near field communication controller NFCC, wherein the first route configuration instruction comprises a preferred route identifier and the first routing table, and the preferred route identifier is used to indicate a routing entry whose priority needs to be boosted in the first routing table; and
the NFCC is adapted to perform routing processing on a received data frame according to the routing method of claim 1.

13. The system according to claim 12, wherein the processing module of the routing apparatus (501) is further configured to generate a second routing table of the j^{th} route type, wherein the second routing table comprises M routing entries, M is an integer greater than or equal to 1, and j is an integer greater than or equal to 1 and less than or equal to L; and
the sending module of the routing apparatus (502) is further configured to send a second route configuration instruction, wherein the second route configuration instruction comprises a first type identifier and the second routing table, and the first type identifier is used to indicate that a route type corresponding to the second routing table is the j^{th} route type, so that the NFCC saves the second routing table of the j^{th} route type according to the second route configuration instruction.

14. The system according to claim 12 or 13, wherein the sending module of the routing apparatus (502) is further configured to:
when the DH determines that boosting the priority of the routing entry in the first routing table needs to be canceled, send, for the DH, a third route configuration instruction to the NFCC, wherein the third route configuration instruction comprises an identifier of the first routing table, and the third route configuration instruction is used to instruct to empty the first routing table, so that the NFCC empties the first routing table.

15. The system according to any one of claims 12 to 14, wherein the sending module of the routing apparatus (502) is further configured to send a fourth route configuration instruction to the NFCC, wherein the fourth route configuration instruction comprises an identifier of the second routing table of the j^{th} route type, and the fourth route configuration instruction is used to instruct to empty the second routing table of the j^{th} route type, so that the NFCC empties the second routing table of the j^{th} route type.

## Patentansprüche

1. Routingverfahren, das Folgendes aufweist:
Erhalten von Routentypen, die durch einen empfangenen Datenrahmen (S101) unterstützt werden, durch eine Nahfeld-Kommunikationssteuerung, NFCC;
sequenzielles Anpassen einer ersten Routingtabelle und, wenn ein passender Routingeintrag des Datenrahmens in der ersten Routingtabelle nicht vorhanden ist, einer zweiten Routingtabelle des Routentyps gemäß einer Sequenz der durch den Datenrahmen unterstützten Routentypen für jeden Routentyp durch die NFCC, bis ein passender Routingeintrag des Datenrahmens erhalten wird (S102), wobei die erste Routingtabelle L Routingeinträge aufweist, deren Prioritäten auf eine höchste Stufe unter allen Routingeinträgen eines Routentyps angehoben werden müssen, zu dem der Routingeintrag gehört, und die L Routingeinträge, deren Prioritäten angehoben werden müssen, jeweils L Routentypen entsprechen, wobei L eine ganze Zahl größer oder gleich 1 ist; und
Auswählen einer Route durch die NFCC gemäß dem passenden Routingeintrag des Datenrahmens (S103).

2. Verfahren nach Anspruch 1, wobei vor dem Erhalten von Routentypen, die durch einen empfangenen Datenrahmen (S101) unterstützt werden, durch eine Nahfeld-Kommunikationssteuerung, NFCC, das Verfahren darüber hinaus Folgendes aufweist:
Empfangen einer ersten Routenkonfigurationsanweisung, die von einem Geräte-Host, DH, (S203) gesendet wird, durch die NFCC, wobei die erste Routenkonfigurationsanweisung eine bevorzugte Routenkennung und die erste Routingtabelle aufweist und die bevorzugte Routenkennung verwendet wird, um einen Routingeintrag anzugeben, dessen Priorität in der ersten Routingtabelle angehoben werden muss; und
Speichern der ersten Routingtabelle durch die NFCC gemäß der ersten Routenkonfigurationsanweisung (S204).

3. Verfahren nach Anspruch 2, wobei die durch den Datenrahmen unterstützten Routentypen R Routentypen sind und die Sequenz der Routentypen von dem ersten Routentyp zu dem R-ten Routentyp verläuft, wobei R eine ganze Zahl größer oder gleich 1 ist; und
das sequenzielle Anpassen einer ersten Routingtabelle und einer zweiten Routingtabelle des Routentyps gemäß einer Sequenz der durch den Datenrahmen unterstützten Routentypen für jeden Routentyp durch die NFCC, bis ein passender Routingeintrag des Datenrahmens erhalten wird (S 102), Folgendes aufweist:
Anpassen der ersten Routingtabelle für den i-ten Routentyp durch die NFCC und, wenn ein passender Routingeintrag des i-ten Routentyps des Datenrahmens in der ersten Routingtabelle vorhanden ist, Bestimmen, dass der passende Routingeintrag des i-ten Routentyps der passende Routingeintrag des Datenrahmens ist; oder
wenn ein passender Routingeintrag des i-ten Routentyps des Datenrahmens in der ersten Routingtabelle nicht vorhanden ist, Anpassen einer zweiten Routingtabelle des i-ten Routentyps durch die NFCC und, wenn ein passender Routingeintrag des i-ten Routentyps des Datenrahmens in der zweiten Routingtabelle vorhanden ist, Bestimmen, dass der passende Routingeintrag des i-ten Routentyps der passende Routingeintrag des Datenrahmens ist; oder
wenn ein passender Routingeintrag des i-ten Routentyps des Datenrahmens in der zweiten Routingtabelle nicht vorhanden ist und i<R, Erhöhen des Werts von i um 1, erneutes Durchführen des Anpassens der ersten Routingtabelle für den i-ten Routentyp durch die NFCC, wobei ein Anfangswert von i gleich 1 ist und i eine ganze Zahl größer oder gleich 1 und kleiner oder gleich R ist.

4. Verfahren nach Anspruch 2 oder 3, wobei vor dem Empfangen einer ersten Routenkonfigurationsanweisung, die von einem DH gesendet wird, durch die NFCC das Verfahren darüber hinaus Folgendes aufweist:
Empfangen einer zweiten Routenkonfigurationsanweisung, die von dem DH (S303) gesendet wird, durch die NFCC, wobei die zweite Routenkonfigurationsanweisung eine erste Typenkennung und die zweite Routingtabelle aufweist und die zweite Routingtabelle M Routingeinträge aufweist und die erste Typenkennung verwendet wird, um anzugeben, dass ein Routentyp, der der zweiten Routingtabelle entspricht, der j-te Routentyp ist, wobei M eine ganze Zahl größer oder gleich 1 ist und j eine ganze Zahl größer oder gleich 1 und kleiner oder gleich L ist; und
Speichern der zweiten Routingtabelle als eine zweite Routingtabelle des j-ten Routentyps gemäß der zweiten Routenkonfigurationsanweisung (S304) durch die NFCC.

5. Routingverfahren, das Folgendes aufweist:
Erzeugen einer ersten Routingtabelle gemäß L Routingeinträgen, deren Prioritäten angehoben werden müssen (S201), durch einen Geräte-Host, DH, wobei die erste Routingtabelle die L Routingeinträge aufweist, deren Prioritäten angehoben werden müssen, und die L Routingeinträge, deren Prioritäten angehoben werden müssen, jeweils L Routentypen entsprechen, wobei L eine ganze Zahl größer oder gleich 1 ist; und
Senden einer ersten Routenkonfigurationsanweisung durch den DH an eine Nahfeld-Kommunikationssteuerung, NFCC, (202), wobei die erste Routenkonfigurationsanweisung eine bevorzugte Routenkennung und die erste Routingtabelle aufweist und die bevorzugte Routenkennung verwendet wird, um einen Routingeintrag anzugeben, dessen Priorität in der ersten Routingtabelle erhöht werden muss; und
die NFCC Routingverarbeitung an einem empfangenen Datenrahmen gemäß dem Routingverfahren nach Anspruch 1 durchführt.

6. Verfahren nach Anspruch 5, wobei vor dem Senden einer ersten Routenkonfigurationsanweisung durch den DH an eine NFCC das Verfahren darüber hinaus Folgendes aufweist:
Erzeugen einer zweiter Routingtabelle des j-ten Routentyps (S301) durch den Geräte-Host, DH, wobei die zweite Routingtabelle M Routingeinträge aufweist, M eine ganze Zahl größer oder gleich 1 ist und j eine ganze Zahl größer oder gleich 1 und kleiner oder gleich L ist; und
Senden einer zweiten Routenkonfigurationsanweisung durch den DH an die NFCC (S302), wobei die zweite Routenkonfigurationsanweisung eine erste Typenkennung und die zweite Routingtabelle aufweist und die erste Typenkennung verwendet wird, um anzugeben, dass ein Routentyp, der der zweiten Routingtabelle entspricht, der j-te Routentyp ist, sodass die NFCC die zweite Routingtabelle des j-ten Routentyps gemäß der zweiten Routenkonfigurationsanweisung speichert.

7. Verfahren nach Anspruch 5 oder 6, wobei nach dem Senden einer ersten Routenkonfigurationsanweisung durch den DH an eine NFCC das Verfahren darüber hinaus Folgendes aufweist:
Senden einer dritten Routenkonfigurationsanweisung durch den DH an die NFCC, wenn der DH bestimmt, dass das Anheben der Priorität des Routingeintrags in der ersten Routingtabelle aufgehoben werden muss, wobei die dritte Routenkonfigurationsanweisung eine Kennung der ersten Routingtabelle aufweist und die dritte Routenkonfigurationsanweisung verwendet wird, um anzuweisen, dass die erste Routingtabelle geleert wird, sodass die NFCC die erste Routingtabelle leert.

8. Routingvorrichtung, die Folgendes aufweist:
ein Erhaltungsmodul (401), ausgebildet zum Erhalten von Routentypen, die durch einen empfangenen Datenrahmen unterstützt werden;
ein Verarbeitungsmodul (402), ausgebildet zum sequenziellen Anpassen einer ersten Routingtabelle und, wenn ein passender Routingeintrag des Datenrahmens in der ersten Routingtabelle nicht vorhanden ist, einer zweiten Routingtabelle des Routentyps gemäß einer Sequenz der durch den Datenrahmen unterstützten Routentypen für jeden Routentyp, bis ein passender Routingeintrag des Datenrahmens erhalten wird, wobei
die erste Routingtabelle L Routingeinträge aufweist, deren Prioritäten auf eine höchste Stufe unter allen Routingeinträgen eines Routentyps angehoben werden müssen, zu dem der Routingeintrag gehört, und die L Routingeinträge, deren Prioritäten angehoben werden müssen, jeweils L Routentypen entsprechen, wobei L eine ganze Zahl größer oder gleich 1 ist; und
ein Routingmodul (403), ausgebildet zum Auswählen einer Route gemäß dem passenden Routingeintrag des Datenrahmens.

9. Vorrichtung nach Anspruch 8, die darüber hinaus Folgendes aufweist:
ein Empfangsmodul (404), ausgebildet zum Empfangen einer ersten Routenkonfigurationsanweisung, die von einem Geräte-Host, DH, gesendet wird, wobei die erste Routenkonfigurationsanweisung eine bevorzugte Routenkennung und die erste Routingtabelle aufweist und die bevorzugte Routenkennung verwendet wird, um einen Routingeintrag anzugeben, dessen Priorität in der ersten Routingtabelle angehoben werden muss; und
ein Konfigurationsmodul (405), ausgebildet zum Speichern der ersten Routingtabelle gemäß der ersten Routenkonfigurationsanweisung.

10. Vorrichtung nach Anspruch 9, wobei die durch den Datenrahmen unterstützten Routentypen R Routentypen sind und die Sequenz der Routentypen von dem ersten Routentyp zu dem R-ten Routentyp verläuft, wobei R eine ganze Zahl größer oder gleich 1 ist; und
das Verarbeitungsmodul (402) speziell konfiguriert ist zum: Anpassen der ersten Routingtabelle für den i-ten Routentyp; und, wenn ein passender Routingeintrag des i-ten Routentyps des Datenrahmens in der ersten Routingtabelle vorhanden ist, Bestimmen, dass der passende Routingeintrag des i-ten Routentyps der passende Routingeintrag des Datenrahmens ist; oder wenn ein passender Routingeintrag des i-ten Routentyps des Datenrahmens in der ersten Routingtabelle nicht vorhanden ist, Anpassen einer zweiten Routingtabelle des i-ten Routentyps und, wenn ein passender Routingeintrag des i-ten Routentyps des Datenrahmens in der zweiten Routingtabelle vorhanden ist, Bestimmen, dass der passende Routingeintrag des i-ten Routentyps der passende Routingeintrag des Datenrahmens ist; oder wenn ein passender Routingeintrag des i-ten Routentyps des Datenrahmens in der zweiten Routingtabelle nicht vorhanden ist und i<R, Erhöhen des Werts von i um 1, erneutes Durchführen des Anpassens der ersten Routingtabelle für den i-ten Routentyp, wobei ein Anfangswert von i gleich 1 ist und i eine ganze Zahl größer oder gleich 1 und kleiner oder gleich R ist.

11. Vorrichtung nach Anspruch 9 oder 10, wobei das Empfangsmodul (404) darüber hinaus ausgebildet ist zum Empfangen einer zweiten Routenkonfigurationsanweisung, die von dem DH gesendet wird, wobei die zweite Routenkonfigurationsanweisung eine erste Typenkennung und die zweite Routingtabelle aufweist und die zweite Routingtabelle M Routingeinträge aufweist und die erste Typenkennung verwendet wird, um anzugeben, dass ein Routentyp, der der zweiten Routingtabelle entspricht, der j-te Routentyp ist, wobei M eine ganze Zahl größer oder gleich 1 ist und j eine ganze Zahl größer oder gleich 1 und kleiner oder gleich L ist; und
das Konfigurationsmodul darüber hinaus ausgebildet ist zum Speichern der zweiten Routingtabelle als eine zweite Routingtabelle des j-ten Routentyps gemäß der zweiten Routenkonfigurationsanweisung.

12. System, das eine Nahfeld-Kommunikationssteuerung und eine Routingvorrichtung aufweist, wobei die Routingvorrichtung Folgendes aufweist:
ein Verarbeitungsmodul (501), ausgebildet zum Erzeugen einer ersten Routingtabelle gemäß L Routingeinträgen, deren Prioritäten angehoben werden müssen, wobei die erste Routingtabelle die L Routingeinträge aufweist, deren Prioritäten angehoben werden müssen, und die L Routingeinträge, deren Prioritäten angehoben werden müssen, jeweils L Routentypen entsprechen, wobei L eine ganze Zahl größer oder gleich 1 ist; und
ein Sendemodul (502), ausgebildet zum Senden einer ersten Routenkonfigurationsanweisung an eine Nahfeld-Kommunikationssteuerung, NFCC, wobei die erste Routenkonfigurationsanweisung eine bevorzugte Routenkennung und die erste Routingtabelle aufweist und die bevorzugte Routenkennung verwendet wird, um einen Routingeintrag anzugeben, dessen Priorität in der ersten Routingtabelle erhöht werden muss; und
die NFCC dafür ausgelegt ist, Routingverarbeitung an einem empfangenen Datenrahmen gemäß dem Routingverfahren nach Anspruch 1 durchzuführen.

13. System nach Anspruch 12, wobei das Verarbeitungsmodul (501) der Routingvorrichtung darüber hinaus ausgebildet ist zum
Erzeugen einer zweiten Routingtabelle des j-ten Routentyps, wobei die zweite Routingtabelle M Routingeinträge aufweist, M eine ganze Zahl größer oder gleich 1 ist und j eine ganze Zahl größer oder gleich 1 und kleiner oder gleich L ist; und
das Sendemodul (502) der Routingvorrichtung darüber hinaus ausgebildet ist zum Senden einer zweiten Routenkonfigurationsanweisung, wobei die zweite Routenkonfigurationsanweisung eine erste Typenkennung und die zweite Routingtabelle aufweist und die erste Typenkennung verwendet wird, um anzugeben, dass ein Routentyp, der der zweiten Routingtabelle entspricht, der j-te Routentyp ist, sodass die NFCC die zweite Routingtabelle des j-ten Routentyps gemäß der zweiten Routenkonfigurationsanweisung speichert.

14. System nach Anspruch 12 oder 13, wobei das Sendemodul (502) der Routingvorrichtung darüber hinaus ausgebildet ist zum:
Senden einer dritten Routenkonfigurationsanweisung für den DH an die NFCC, wenn der DH bestimmt, dass das Anheben der Priorität des Routingeintrags in der ersten Routingtabelle aufgehoben werden muss, wobei die dritte Routenkonfigurationsanweisung eine Kennung der ersten Routingtabelle aufweist und die dritte Routenkonfigurationsanweisung verwendet wird, um anzuweisen, dass die erste Routingtabelle geleert wird, sodass die NFCC die erste Routingtabelle leert.

15. System nach einem der Ansprüche 12 bis 14, wobei das Sendemodul (502) der Routingvorrichtung darüber hinaus ausgebildet ist zum Senden einer vierten Routenkonfigurationsanweisung an die NFCC, wobei die vierte Routenkonfigurationsanweisung eine Kennung der zweiten Routingtabelle des j-ten Routentyps aufweist und die vierte Routenkonfigurationsanweisung verwendet wird, um anzuweisen, dass die zweite Routingtabelle des j-ten Routentyps geleert wird, sodass die NFCC die zweite Routingtabelle des j-ten Routentyps leert.

## Revendications

1. Procédé de routage, consistant à :
obtenir, par un contrôleur de communication en champ proche (NFCC), des types de route pris en charge par une trame de données reçue (S101) ;
mettre en concordance séquentiellement, par le NFCC selon une séquence des types de route pris en charge par la trame de données, pour chaque type de route, une première table de routage et, si une entrée de routage concordante de la trame de données n'existe pas dans la première table de routage, une seconde table de routage du type de route, jusqu'à ce qu'une entrée de routage concordante de la trame de données soit obtenue (S 102),
la première table de routage comprenant L entrées de routage dont les priorités doivent être amplifiées à un niveau maximum parmi toutes les entrées de routage d'un type de route auquel l'entrée de routage appartient, et les L entrées de routage dont les priorités doivent être amplifiées correspondant respectivement à L types de route, L étant un entier supérieur ou égal à 1 ; et
sélectionner, par le NFCC, une route selon l'entrée de route concordante de la trame de données (S103).

2. Procédé selon la revendication 1, le procédé consistant en outre, avant l'obtention, par le NFCC, de types de route pris en charge par une trame de données reçue (S101), à :
recevoir, par le NFCC, une première instruction de configuration de route, envoyée par un dispositif hôte (DH) (S203), la première instruction de configuration de route comprenant un identifiant de route préférée et la première table de routage, et l'identifiant de route préféré étant utilisé pour indiquer une entrée de routage dont la priorité doit être amplifiée dans la première table de routage ; et
enregistrer, par le NFCC, la première table de routage selon la première instruction de configuration de route (S204).

3. Procédé selon la revendication 2, dans lequel les types de route pris en charge par la trame de données sont R types de route, et la séquence des types de route va du premier type de route au R^{ième} type de route dans l'ordre, R étant un entier supérieur ou égal à 1 ; et
la mise en concordance séquentielle, par le NFCC selon une séquence des types de route pris en charge par la trame de données, pour chaque type de route, une première table de routage et une seconde table de routage du type de route, jusqu'à ce qu'une entrée de routage concordante de la trame de données soit obtenue (S102), consiste à : mettre en concordance, par le NFCC pour le i^{ème} type de route, la première table de routage, et si une entrée de routage concordante du i^{ème} type de route de la trame de données existe dans la première table de routage, déterminer que l'entrée de routage concordante du i^{ème} type de route est l'entrée de routage concordante de la trame de données ; ou
si une entrée de routage concordante du i^{ème} type de route de la trame de données n'existe pas dans la première table de routage, faire concorder, par le NFCC, une seconde table de routage du i^{ème} type de route, et si une entrée de routage concordante du i^{ème} type de route de la trame de données existe dans la seconde table de routage, déterminer que l'entrée de routage concordante du i^{ème} type de route est l'entrée de routage concordante de la trame de données ; ou
si une entrée de routage concordante du i^{ème} type de route de la trame de données n'existe pas dans la seconde table de routage et si i<R, augmenter une valeur de i de 1, réaliser de nouveau la mise en concordance, par le NFCC pour le i^{ème} type de route, de la première table de routage, une valeur initiale de i étant 1 et i étant un entier supérieur ou égal à 1 et inférieur ou égal à R.

4. Procédé selon la revendication 2 ou 3, le procédé consistant en outre, avant la réception, par le NFCC, d'une première instruction de configuration de route envoyée par un DH, à :
recevoir, par le NFCC, une deuxième instruction de configuration de route envoyée par le DH (S303), la deuxième instruction de configuration de route comprenant un premier identifiant de type et la seconde table de routage, la seconde table de routage comprenant M entrées de routage, et le premier identifiant de type étant utilisé pour indiquer qu'un type de route correspondant à la seconde table de routage est le j^{ème} type de route, M étant un entier supérieur ou égal à 1 et j étant un entier supérieur ou égal à 1 et inférieur ou égal à L ; et
enregistrer, par le NFCC, la seconde table de routage en tant que seconde table de routage du j^{ème} type de route selon la deuxième instruction de configuration de route (S304).

5. Procédé de routage, consistant à :
générer, par un dispositif hôte (DH), une première table de routage selon L entrées de routage dont les priorités doivent être amplifiées (S201), la première table de routage comprenant les L entrées de routage dont les priorités doivent être amplifiées, et les L entrées de routage dont les priorités doivent être amplifiées correspondant respectivement à L types de route, L étant un entier supérieur ou égal à 1 ; et
envoyer, par le DH, une première instruction de configuration de route à un contrôleur de communication en champ proche (NFCC) (S202), la première instruction de configuration de route comprenant un identifiant de route préférée et la première table de routage, et l'identifiant de route préféré étant utilisé pour indiquer une entrée de routage dont la priorité doit être amplifiée dans la première table de routage, et le NFCC réalisant un traitement de routage sur une trame de données reçue, selon le procédé de routage selon la revendication 1.

6. Procédé selon la revendication 5, le procédé consistant en outre, avant l'envoi, par le DH, d'une première instruction de configuration de route à un NFCC, à :
générer, par le dispositif hôte (DH), une seconde table de routage du j^{ème} type de route (S301), la seconde table de routage comprenant M entrées de routage, M étant un entier supérieur ou égal à 1 et j étant un entier supérieur ou égal à 1 et inférieur ou égal à L ; et
envoyer, par le DH, une deuxième instruction de configuration de route au NFCC (S302), la deuxième instruction de configuration de route comprenant un premier identifiant de type et la seconde table de routage, et le premier identifiant de type étant utilisé pour indiquer qu'un type de route correspondant à la seconde table de routage est le j^{ème} type de route, de sorte que le NFCC enregistre la seconde table de routage du j^{ème} type de route selon la deuxième instruction de configuration de route.

7. Procédé selon la revendication 5 ou 6, le procédé consistant en outre, après l'envoi, par le DH, d'une première instruction de configuration de route à un NFCC, à :
quand le DH détermine qu'une amplification de la priorité de l'entrée de routage dans la première table de routage doit être annulée, envoyer, par le DH, une troisième instruction de configuration de route au NFCC, la troisième instruction de configuration de route comprenant un identifiant de la première table de routage, et la troisième instruction de configuration de route étant utilisée pour donner l'instruction de vider la première table de routage, de sorte que le NFCC vide la première table de routage.

8. Appareil de routage, comprenant :
un module d'obtention (401), configuré pour obtenir des types de route pris en charge par une trame de données reçue ;
un module de traitement (402), configuré pour mettre en concordance séquentiellement, selon une séquence des types de route pris en charge par la trame de données, pour chaque type de route, une première table de routage et, si une entrée de routage concordante de la trame de données n'existe pas dans la première table de routage, une seconde table de routage du type de route, jusqu'à ce qu'une entrée de routage concordante de la trame de données soit obtenue,
la première table de routage comprenant L entrées de routage dont les priorités doivent être amplifiées à un niveau maximum parmi toutes les entrées de routage d'un type de route auquel l'entrée de routage appartient, et les L entrées de routage dont les priorités doivent être amplifiées correspondant respectivement à L types de route, L étant un entier supérieur ou égal à 1 ; et
un module de routage (403), configuré pour sélectionner une route selon l'entrée de routage concordante de la trame de données.

9. Appareil selon la revendication 8, comprenant en outre :
un module de réception (404), configuré pour recevoir une première instruction de configuration de route, envoyée par un dispositif hôte (DH), la première instruction de configuration de route comprenant un identifiant de route préférée et la première table de routage, et l'identifiant de route préféré étant utilisé pour indiquer une entrée de routage dont la priorité doit être amplifiée dans la première table de routage ; et
un module de configuration (405), configuré pour enregistrer la première table de routage selon la première instruction de configuration de route.

10. Appareil selon la revendication 9, dans lequel les types de route pris en charge par la trame de données sont R types de route, et la séquence des types de route va du premier type de route au R^{ième} type de route dans l'ordre, R étant un entier supérieur ou égal à 1 ; et
le module de traitement (402) est spécifiquement configuré pour : faire concorder, pour le i^{ème} type de route, la première table de routage ; et si une entrée de routage concordante du i^{ème} type de route de la trame de données existe dans la première table de routage, déterminer que l'entrée de routage concordante du i^{ème} type de route est l'entrée de routage concordante de la trame de données ; ou si une entrée de routage concordante du i^{ème} type de route de la trame de données n'existe pas dans la première table de routage, faire concorder une seconde table de routage du i^{ème} type de route, et si une entrée de routage concordante du i^{ème} type de route de la trame de données existe dans la seconde table de routage, déterminer que l'entrée de routage concordante du i^{ème} type de route est l'entrée de routage concordante de la trame de données ; ou si une entrée de routage concordante du i^{ème} type de route de la trame de données n'existe pas dans la seconde table de routage et si i<R, augmenter une valeur de i de 1, réaliser de nouveau la mise en concordance, pour le i^{ème} type de route, de la première table de routage, une valeur initiale de i étant 1 et i étant un entier supérieur ou égal à 1 et inférieur ou égal à R.

11. Appareil selon la revendication 9 ou 10, dans lequel le module de réception (404) est en outre configuré pour recevoir une deuxième instruction de configuration de route envoyée par le DH, la deuxième instruction de configuration de route comprenant un premier identifiant de type et la seconde table de routage, la seconde table de routage comprenant M entrées de routage, et le premier identifiant de type étant utilisé pour indiquer qu'un type de route correspondant à la seconde table de routage est le j^{ème} type de route, M étant un entier supérieur ou égal à 1 et j étant un entier supérieur ou égal à 1 et inférieur ou égal à L ; et
le module de configuration étant en outre configuré pour enregistrer la seconde table de routage en tant que seconde table de routage du j^{ème} type de route selon la deuxième instruction de configuration de route.

12. Système comprenant un contrôleur de communication en champ proche et un appareil de routage, l'appareil de routage comprenant :
un module de traitement (501), configuré pour générer une première table de routage selon L entrées de routage dont les priorités doivent être amplifiées, la première table de routage comprenant les L entrées de routage dont les priorités doivent être amplifiées, et les L entrées de routage dont les priorités doivent être amplifiées correspondant respectivement à L types de route, L étant un entier supérieur ou égal à 1 ; et
un module d'envoi (502), configuré pour envoyer une première instruction de configuration de route à un contrôleur de communication en champ proche (NFCC), la première instruction de configuration de route comprenant un identifiant de route préférée et la première table de routage, et l'identifiant de route préféré étant utilisé pour indiquer une entrée de routage dont la priorité doit être amplifiée dans la première table de routage ; et
le NFCC étant conçu pour réaliser un traitement de routage sur une trame de données reçue, selon le procédé de routage selon la revendication 1.

13. Système selon la revendication 12, dans lequel le module de traitement de l'appareil de routage (501) est en outre configuré pour générer une seconde table de routage du j^{ème} type de route, la seconde table de routage comprenant M entrées de routage, M étant un entier supérieur ou égal à 1 et j étant un entier supérieur ou égal à 1 et inférieur ou égal à L ; et
le module d'envoi de l'appareil de routage (502) est en outre configuré pour envoyer une deuxième instruction de configuration de route,
la deuxième instruction de configuration de route comprenant un premier identifiant de type et la seconde table de routage, et le premier identifiant de type étant utilisé pour indiquer qu'un type de route correspondant à la seconde table de routage est le j^{ème} type de route, de sorte que le NFCC enregistre la seconde table de routage du j^{ème} type de route selon la deuxième instruction de configuration de route.

14. Système selon la revendication 12 ou 13, dans lequel le module d'envoi de l'appareil de routage (502) est en outre configuré pour :
quand le DH détermine qu'une amplification de la priorité de l'entrée de routage dans la première table de routage doit être annulée, envoyer, pour le DH, une troisième instruction de configuration de route au NFCC, la troisième instruction de configuration de route comprenant un identifiant de la première table de routage, et la troisième instruction de configuration de route étant utilisée pour donner l'instruction de vider la première table de routage, de sorte que le NFCC vide la première table de routage.

15. Système selon l'une quelconque des revendications 12 à 14, dans lequel le module d'envoi de l'appareil de routage (502) est en outre configuré pour envoyer une quatrième instruction de configuration de route au NFCC, la quatrième instruction de configuration de route comprenant un identifiant de la seconde table de routage du j^{ème} type de route, et la quatrième instruction de configuration de route étant utilisée pour donner l'instruction de vider la seconde table de routage du j^{ème} type de route, de sorte que le NFCC vide la seconde table de routage du j^{ème} type de route.
